# EUROPEAN PATENT SPECIFICATION

(11) **EP 2 396 635 B1**
(45) Date of publication and mention of the grant of the patent: **16.01.2013**
(21) Application number: 10704083.4
(22) Date of filing: 10.02.2010
(51) Int. Cl.: G01G 19/44

(54) **A ONE FOOT SCALE**
EINFUSSWAAGE
BALANCE POUR UN SEUL PIED

(30) Priority: 10.02.2009 EP 09001858
(43) Date of publication of application: 21.12.2011
(73) Proprietor: Designit A/S, 8000 Århus C (DK)
(72) Inventor: GEERT-JENSEN, Anders, DK-8240 Risskov (DK)
(74) Representative: Zacco Denmark A/S
(86) International application number: PCT/DK2010/000020
(87) International publication number: WO 2010/091687

(56) References cited:
- EP-A- 1 655 586
- GB-A- 2 187 852
- JP-A- 59 193 321

## Description

### FIELD OF THE INVENTION

This invention relates to a one foot scale for weighing a person.

### BACKGROUND OF THE INVENTION

When focusing on well-being, control of weight is an important issue. Conventional scales are known to be large and visually unattractive. Further, people might consider their weight interest a very personal issue and they are therefore not interested in having a large weight positioned on e.g. their bathroom floor.

On the market today there are known scales configured for a person standing with both feet on a weighing surface of the scale to measure the weight which is displayed on a display, e.g. an LCD. Likewise, there are scales configured for one foot. However, these one foot scales are associated with drawbacks. One drawback is that they are still large due to the need of supporting essentially the entire foot. Another drawback with known one foot scales is that standing on one foot makes the instantaneous weighing less user friendly and more unreliable. This can be due to the fact that the person accelerates vertically in the beginning and the end of the weighing session. It can also be due to the fact that, when "holding the balance" the person's corrections will give a turning in the weighing. Twitching of the muscles when standing on one foot may also provide unreliable results. Known digital one foot scales typically use an average value that is the average calculated value over a longer time, typically several seconds. The variations of the weighing results for the same person will be significant. A solution to this problem would be for the person to balance on the scale for an unrealistically long time. This would be inconvenient for daily use as the average time would be too long. Accordingly, there is a need to provide an improved one foot scale.

GB 2187852 describes a portable scale comprising a housing with a platform sized so as to accommodate thereon, during weighing operations, one foot or shoe of a person, and means for displaying the weighing operation. GB 2187852 also discloses means for averaging former weighing operations held in a memory and comparing the average with the displayed weight. This type of weighing does not give a result with high accuracy.

JP 59 193321 discloses a one-foot scale for weighing a person, wherein the scale displays the weight of that person, when the difference between two consecutive measurements is smaller than a predetermined value. This solution therefore results in a very inaccurate weight measuring and further, in order to obtain a weighing result, the user has to stand quite still between two measurements which can be quite difficult or at least time consuming before the user succeeds in doing so. EP 1655586 discloses a digital measurement apparatus for weighing a person, which calculates a stable weight value by comparing the acquired date with a reference value.

### OBJECT AND SUMMARY OF THE INVENTION

The object of the invention is to solve the above mentioned problems.

This is obtained by a one foot scale for weighing a person comprising a housing, the housing comprising a surface part supporting at least a part of a foot while weighing the person, where the surface part is connected to at least one weight detecting means,
- the weight detecting means configured to provide a sequence of digital sample values to a processing unit,
- the processing unit configured to calculate an average weight of the person from the sequence of digital samples; and
- an output unit for providing the calculated weight of the person.

The processing unit is configured to calculate the weight of the person from the sequence of digital samples by:
- calculating a threshold weight,
- selecting a subset of the sequence of digital samples based on the calculated threshold weight,
- calculating the average weight within the selected subset and
- comparing the average weight within the selected subset to the threshold weight.

This results in that a very accurate value of the weight is obtained, since the weight is based on not only two measuring points, but on a subset of measuring points.

The need for a person to stand extremely still in order to obtain a measurement is rendered superfluous. Thus, when "holding the balance" the person's corrections, e.g. twitching of the muscles when standing on at least a part of one foot, do not matter, thus making the scale significantly more user-friendly and reliable.

Problems caused when a person accelerates vertically in the beginning and the end of the weighing session is avoided in the scale.

A scale smaller than the normal one foot scale is adequate for obtaining an accurate measurement of a person's weight. Hence, the large conventional scales being visually unattractive, which from an esthetical perspective might affect persons having difficulties to hold a normal weight, are avoided.

This will provide an accurate weighing operation using only a small size surface part.

Embodiments of the scale include those where the output unit is configured to display the calculated weight and/or to provide an audio output representing the weight. Thus, the result of the weighing can be communicated visually and acoustically.

Embodiments of the scale include those where the processing unit is configured to provide a signal to the output unit when a sufficiently large number of samples to calculate the weight have been provided. That is, an output signal may confirm that the processor unit has received enough samples to make an accurate calculation. Both the display and the audio output can communicate if a calculation has not been sufficiently done based on the signals from the processing unit.

Embodiments of the scale include those where the processing unit is configured to calculate the average weight by selecting a subset of samples, where the subset is determined by calculating a threshold weight. The subset may then be determined by selecting all samples from the first sample that is larger than the threshold to the last sample that is larger than the threshold.

Embodiments of the scale include those where the processing unit is configured to calculate the average weight by selecting a subset of samples, where the subset is determined by calculating a threshold weight. The subset may then be determined by selecting all samples from the first sample that is less than the threshold after the first sample that is larger than the threshold to the last sample that is larger than the threshold. Such a selection will reduce the number of samples that are larger than the threshold.

Embodiments of the scale include those where the processing unit is configured to calculate the average weight by selecting a subset of samples, where the subset is determined by calculating a threshold weight. The subset may then be determined by selecting all samples from the subset being all samples from the first sample that is larger than the threshold to the last sample that is less than the threshold before the last sample that is larger then the threshold. Such a selection will reduce the number of samples that are larger than the threshold.

The threshold may be an average value of all sample values multiplied with a correction factor. This improves calculation of an accurate average value.

Embodiments include those where the surface part is to receive at least a part of a foot. The advantage of such embodiments being that the scale will be small, esthetical and only need a part of a foot.

Further, an indicator may be comprised in the scale, configured to provide an indicator signal when the weight has been calculated. This is to notify that the calculations are sufficient and a reliable weight has been obtained.

### BRIEF DESCRIPTION OF THE DRAWINGS

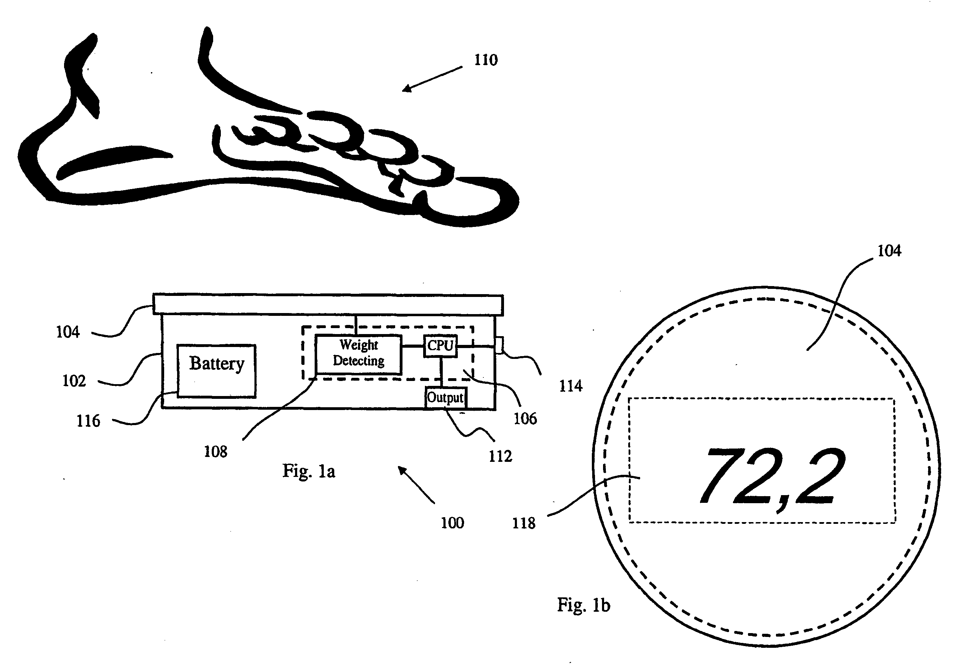

In the following, preferred embodiments of the invention will be described referring to the figures, where
figure 1a schematically illustrates a side view of a scale according to the present invention,
figure 1 b illustrates a top view of a scale,
figure 2 illustrates a graph of weight samples,
figure 3 illustrates a flow chart of a weight calculation process,

### DESCRIPTION OF EMBODIMENTS

Figure 1a schematically, illustrates a side view of a housing 102 of a scale 100. The housing 102 comprises a bottom part, like a bowl with a flat bottom, and a top part. The top part is a foot surface part 104 which covers the bottom part like a lid. The scale 100 comprises a weight detecting means 108, a processing unit 106, an output unit 112, an indicator 114 and a battery 116. The weight detecting means 108 is connected to the top surface part 104 and to the processing unit 106 for handling a signal from the weight detecting means 108. The top surface part 104 is configured and dimensioned to receive at least a part of a foot 110 that starts a weight calculation process which is handled by the processing unit 106. An indicator 114 and the output unit 112 are connected to the processing unit 106. As will be described in more detail below, the indicator 114 indicates when enough signals, being enough samples, have been received by the processing unit 106 to start the calculation process of the samples. The output 112 can be used for presenting the measured weight via a display or via a speaker or both via display and speaker.

Figure 1b schematically illustrates a top view of the scale 100. It is shown that the weight comprises an output unit being a display 118 for displaying results incorporated in the foot surface part 104. A display 118 can also be an external device that is to be coupled to the scale 100.

Since the scale and more particularly the top surface part only needs at least a part of one foot to rest on the top surface part in order to determine the weight, the top surface part and thereby the scale can be made quite small. It should be possible to balance on the weight while weighing, but tests have shown that scales having a size of 5 cm in diameter are sufficient for balancing - this of course all depends on both the user's abilities and the size of the user's feet. The size of the scale 100 could in other examples be the width of an adult foot or smaller. The scale 100 could be adapted to receive the ball of the foot 110.

Although the scale has been illustrated as being essentially circular in shape, other shapes, such as triangular, rectangular, pentangular, hexagonal, septagonal, octagonal etc, are also feasible as the skilled person will realize.

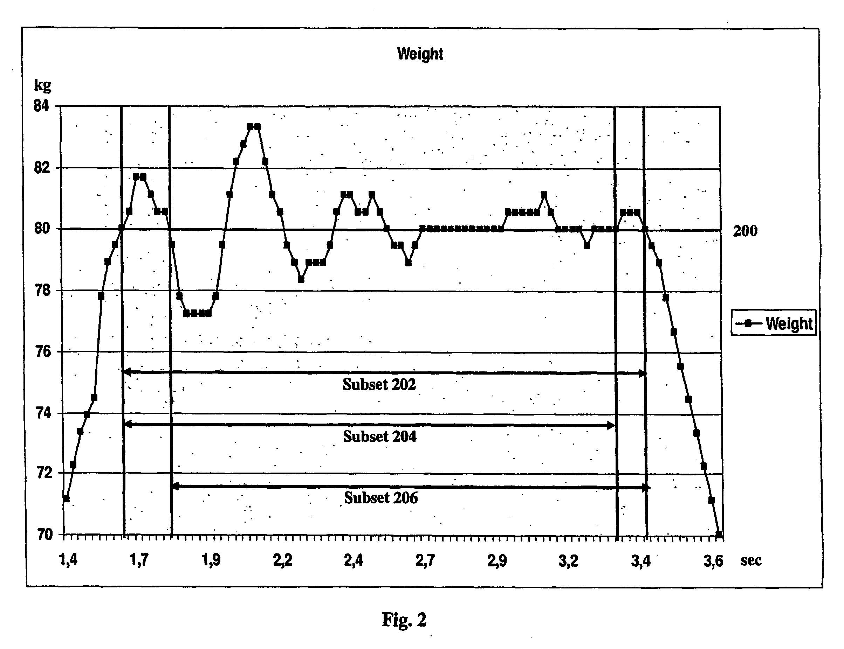

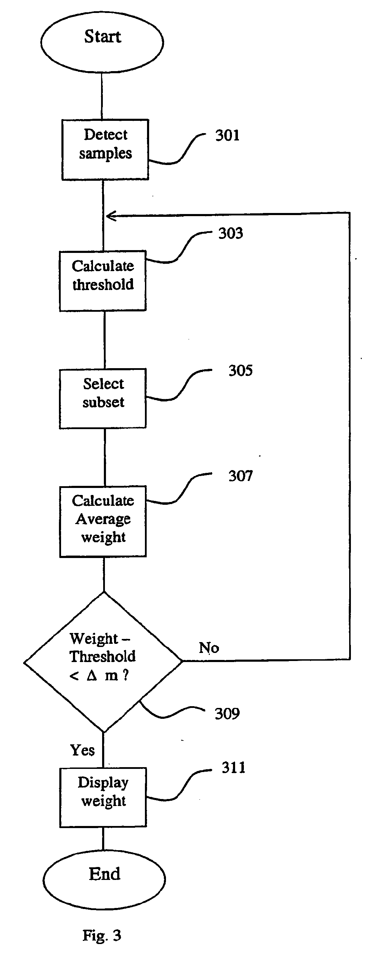

When measuring the weight, the measuring process cycle may be as follows:
1: The person commences to stand on the scale 100 and it starts to obtain samples of weight. The scale is preferably configured such that it is not necessary to turn it on prior to stepping onto the scale.
2: The full weight of the person is now on the ball of the foot on the scale's foot surface part 104, and the weight samples will now change between under and over the average weight because of muscle vibrations and mass centre flux ratios.
3: A measurement algorithm running in the processing unit 106 estimates that the number of samples is sufficient and a beep is made to notify the person that it is ok to remove the foot from the scale 100.
4: The person commences getting off the scale 100 and the measured weight samples get smaller because of the mass centre lowering and the second foot taking over the weight of the person.
5: The scale 100 is without load and the tare (zero value) is measured. This is performed to accommodate for any properties of the weight detecting means 108, electronics or mechanical supports being changed since previous measurement.
6: The weight is calculated by using the sequence of samples weight values as will be described in the following with reference to fig. 2 and fig 3.

Figure 3 illustrates an algorithm for calculating the weight of a person. The algorithm is an iterative process and involves the use of an initial threshold weight value (as shown in fig. 2 by 200) to define a subset of samples to be used to calculate the weight. The calculated weight is then used as a new threshold and the process is iterated until convergence is reached.

In other words, in a detecting step 301 weight samples are obtained as summarized above. In a calculating step 303 an initial threshold weight value is calculated as an average value of the obtained subset of samples. This initial threshold weight is preferably corrected by multiplication with a correction factor, e.g. 0.95, in order to enable a fast convergence in the following iterations.

In a selecting step 305 a subset of samples is selected from all samples, from the first sample that is larger than the estimated threshold to the last sample that is larger than the estimated threshold (as shown in fig. 2 by subset 202). This selected subset of samples is then used to calculate the average weight in a calculating step 307. Step 309 is a comparison step where the calculated weight is compared with the estimated weight threshold. If the difference is smaller than a predetermined convergence criterion, the weight is displayed in the displaying step 311. But if the difference is larger than the convergence criterion, then the weight threshold will be recalculated from the calculating step 303 again in one or more iterations, and the difference between the calculated weight and the weight threshold will be smaller for each iteration.

During an iteration, in the selecting step 305, another subset of samples can be selected, being all samples in the range from the first sample that is less than the estimated threshold after the first sample that is larger than the estimated threshold to the last sample that is larger than the estimated threshold (as shown in fig. 2 by subset 206).

Yet another subset of samples can be selected, in the selecting step 305, being all samples in the range from the first sample that is larger than the estimated threshold to the last sample that is less than the estimated threshold before the last sample that is larger than the estimated threshold (as shown in fig. 2 by subset 204).

Tests have shown that, by using the subset 202, a reliable result can be obtained with very few iterations.

Thereafter the result will be mediated in a displaying step 311 to the display or audibly or both.

## Claims

1. A one foot scale (100) for weighing a person comprising a housing (102), the housing (102) comprising a surface part (104) adapted to support at least a part of a foot while weighing the person, where the surface part is connected to at least one weight detecting means (108),
- the weight detecting means (108) configured to provide a sequence of digital sample values to a processing unit 106,
- the processing unit (106) configured to calculate an average weight of the person from the sequence of digital samples; and
- an output unit (112) configured to provide the calculated weight of the person,
**characterised in that** the processing unit (106) is configured to calculate the weight of the person from the sequence of digital samples by:
- calculating a threshold weight,
- selecting a subset of the sequence of digital samples based on the calculated threshold weight,
- calculating the average weight within the selected subset and
- comparing the average weight within the selected subset to the threshold weight.

2. A scale (100) according to claim 1 wherein the output unit (112) is configured to display the calculated weight.

3. A scale (100) according to claim 1 or 2 wherein the output unit (112) is configured to provide an audio output.

4. A scale (100) according to any of claims 1 to 3 wherein the processor unit (106) is configured to provide a signal to the output unit (112) when a sufficiently large number of samples to calculate the weight has been provided.

5. A scale (100) according to claims 1-4 wherein the processor unit (106) is configured to calculate the average weight by selecting a subset of samples, where the subset is determined by
- calculating a threshold weight,
- selecting the subset such that the subset being all samples from the first sample that is larger than the threshold to the last sample that is larger than the threshold (202).

6. A scale (100) according to claims 1-4 wherein the processor unit (106) is configured to calculate the average weight by selecting a subset of samples, where the subset is determined by
- calculating a threshold weight,
- selecting the subset such that the subset being all samples from the first sample that is less than the threshold after the first sample that is larger than the threshold to the last sample that is larger than the threshold (206).

7. A scale (100) according to claims 1-4 wherein the processor unit (106) is configured to calculate the average weight by selecting a subset of samples, where the subset is determined by
- calculating a threshold weight,
- selecting the subset such that the subset being all samples from the first sample that is larger than the threshold to the last sample that is less than the threshold before the last sample that is larger then the threshold (204).

8. A scale (100) according to any of claims 5 to 7 wherein the threshold is an average value of all sample values multiplied with a correction factor.

9. A scale (100) according to any of claims 1 to 8, where the calculation of the threshold weight and the selection of the subset is an iterative process.

10. A scale (100) according to any of claims 1 to 9 wherein the surface part (104) is configured to receive at least a ball part of a foot (110).

## Patentansprüche

1. Einfußwaage (100) zum Wiegen einer Person, umfassend ein Gehäuse (102), wobei das Gehäuse (102) ein Oberflächenteil (104) umfasst, das eingerichtet ist, um mindestens einen Teil eines Fußes während des Wiegens der Person zu unterstützen, wobei das Oberflächenteil mit mindestens einem Gewichtserkennungsmittel (108) verbunden ist, wobei
- das Gewichtserkennungsmittel (108) ausgelegt ist, um einer Verarbeitungseinheit (106) eine Reihe von digitalen Probewerten zuzuführen,
- die Verarbeitungseinheit (106) ausgelegt ist, um ein Durchschnittsgewicht der Person aus der Reihe von digitalen Proben zu berechnen; und
- eine Ausgabeeinheit (112) ausgelegt ist, um das berechnete Gewicht der Person bereitzustellen,
**dadurch gekennzeichnet, dass** die Verarbeitungseinheit (106) ausgelegt ist, um das Gewicht der Person aus der Reihe von digitalen Proben durch:
- Berechnen eines Grenzwerts,
- Auswählen einer Teilmenge der Reihe von digitalen Proben auf Basis des berechneten Grenzwerts,
- Berechnen des Durchschnittsgewichts innerhalb der gewählten Teilmenge und
- Vergleichen des Durchschnittsgewichts innerhalb der gewählten Teilmenge mit dem Grenzwert
zu berechnen.

2. Waage (100) nach Anspruch 1, wobei die Ausgabeeinheit (112) ausgelegt ist, um das berechnete Gewicht anzuzeigen.

3. Waage (100) nach Anspruch 1 oder 2, wobei die Ausgabeeinheit (112) ausgelegt ist, um eine Audioausgabe bereitzustellen.

4. Waage (100) nach irgendeinem der Ansprüche 1 bis 3, wobei die Verarbeitungseinheit (106) ausgelegt ist, um der Ausgabeeinheit (112) ein Signal zuzuführen, wenn eine ausreichend große Anzahl von Proben bereitgestellt worden ist, um das Gewicht zu berechnen.

5. Waage (100) nach Anspruch 1-4, wobei die Verarbeitungseinheit (106) ausgelegt ist, um das Durchschnittsgewicht durch Auswählen einer Teilmenge von Proben zu berechnen, wobei die Teilmenge durch Folgendes bestimmt wird
- Berechnen eines Grenzwerts,
- Auswählen der Teilmenge, so dass die Teilmenge alle Proben von der ersten Probe, die größer als der Grenzwert ist, bis zur letzten Probe, die größer als der Grenzwert (202) ist, sind.

6. Waage (100) nach Anspruch 1-4, wobei die Verarbeitungseinheit (106) ausgelegt ist, um das Durchschnittsgewicht durch Auswählen einer Teilmenge von Proben zu berechnen, wobei die Teilmenge durch Folgendes bestimmt wird
- Berechnen eines Grenzwerts,
- Auswählen der Teilmenge, so dass die Teilmenge alle Proben von der ersten Probe, die kleiner als der Grenzwert ist, nach der ersten Probe, die größer als der Grenzwert ist, bis zur letzten Probe, die größer als der Grenzwert (206) ist, sind.

7. Waage (100) nach Anspruch 1-4 wobei die Verarbeitungseinheit (106) ausgelegt ist, um das Durchschnittsgewicht durch Auswählen einer Teilmenge von Proben zu berechnen, wobei die Teilmenge durch Folgendes bestimmt wird
- Berechnen eines Grenzwerts,
- Auswählen der Teilmenge, so dass die Teilmenge alle Proben von der ersten Probe, die größer als der Grenzwert ist, bis zur letzten Probe, die kleiner als der Grenzwert ist, vor der letzten Probe, die größer als der Grenzwert (204) ist, sind.

8. Waage (100) nach irgendeinem der Ansprüche 5 bis 7, wobei der Grenzwert ein Durchschnittswert von allen Probenwerten multipliziert mit einem Korrektionsfaktor ist.

9. Waage (100) nach irgendeinem der Ansprüche 1 bis 8, wobei das Berechnen des Grenzgewichts und das Auswählen der Teilmenge einen iterativen Prozess ausmachen.

10. Waage (100) nach irgendeinem der Ansprüche 1 bis 9, wobei das Oberflächenteil (104) ausgelegt ist, um mindestens eine Fußballe (110) entgegenzunehmen.

## Revendications

1. Balance pour un seul pied (100) pour peser un être humain comprenant un boîtier (102), le boîtier (102) comprenant une partie de surface (104) adaptée pour supporter au moins une partie d'un pied lors du pesage de l'être humain, la partie de surface étant reliée à au moins un moyen de détection de poids (108),
- le moyen de détection de poids (108) configuré pour fournir une séquence de valeurs d'échantillons numériques à une unité de processeur (106),
- l'unité de processeur (106) configurée pour calculer un poids moyen de l'être humain à partir de la séquence d'échantillons numériques; et
- une unité de sortie (112) configurée pour fournir le poids calculé de l'être humain,
**caractérisée en ce que** l'unité de processeur (106) est configuré pour calculer le poids de l'être humain à partir de la séquence d'échantillons numériques en:
- calculant un poids seuil,
- sélectionnant un sous-ensemble de la séquence d'échantillons numériques à la base du poids seuil calculé,
- calculant le poids moyen à l'intérieur du sous-ensemble sélectionné et
- comparant le poids moyen à l'intérieur du sous-ensemble sélectionné au poids seuil.

2. Balance (100) selon la revendication 1, dans laquelle l'unité de sortie (112) est configurée pour afficher le poids calculé.

3. Balance (100) selon la revendication 1 ou 2, dans laquelle l'unité de sortie (112) est configurée pour fournir une sortie audio.

4. Balance (100) selon l'une quelconque des revendications 1 à 3, dans laquelle l'unité de processeur (106) est configurée pour fournir un signal à l'unité de sortie (112), lorsque le nombre d'échantillons qui ont été fournis suffit de calculer le poids.

5. Balance (100) selon l'une quelconque des revendications 1 à 4, dans laquelle l'unité de processeur (106) est configurée pour calculer le poids moyen en sélectionnant un sous-ensemble d'échantillons, le sous-ensemble étant déterminé par
- le calcul d'un poids seuil,
- la sélection du sous-ensemble si bien que le sous-ensemble étant tous les échantillons à partir du premier échantillon qui est supérieur au seuil jusqu'au dernier échantillon qui est supérieur au seuil (202).

6. Balance (100) selon les revendications 1 à 4, dans laquelle l'unité de processeur (106) est configurée pour calculer le poids moyen en sélectionnant un sous-ensemble d'échantillons, le sous-ensemble étant déterminée par
- le calcul d'un poids seuil,
- la sélection du sous-ensemble si bien que le sous-ensemble étant tous les échantillons à partir du premier échantillon qui est inférieur au seuil après le premier échantillon qui est supérieur au seuil jusqu'au dernier échantillon qui est supérieur au seuil (206).

7. Balance (100) selon les revendications 1 à 4, dans laquelle l'unité de processeur (106) est configurée pour calculer le poids moyen en sélectionnant un sous-ensemble d'échantillons, le sous-ensemble étant déterminée par
- le calcul d'un poids seuil,
- la sélection du sous-ensemble si bien que le sous-ensemble étant tous les échantillons à partir du premier échantillon qui est supérieur au seuil jusqu'au dernier échantillon qui est inférieur au seuil avant le dernier échantillon qui est supérieur au seuil (204).

8. Balance (100) selon l'une quelconque des revendications 5 à 7, dans laquelle le seuil est une valeur moyenne de toutes les valeurs d'échantillons multipliées par un facteur de correction.

9. Balance (100) selon l'une quelconque des revendications 1 à 8, dans laquelle le calcul du poids seuil et la sélection du sous-ensemble constituent un processus itératif.

10. Balance (100) selon l'une quelconque des revendications 1 à 9, dans laquelle la partie de surface (104) est configurée pour recevoir au moins une partie de plante d'un pied (110).
